# DEMANDE DE BREVET EUROPEEN

(11) **EP 4 703 705 A1**
(43) Date de publication de la demande: **04.03.2026**
(21) Numéro de dépôt: 25194398.1
(22) Date de dépôt: 06.08.2025
(51) Int. Cl.: G01N 1/40, B01L 3/00, B01D 29/68, B01D 29/72

(54) **DISPOSITIF UTILISÉ POUR LA RESUSPENSION DE MATÉRIEL BIOLOGIQUE CAPTURÉ SUR UN FILTRE**

(30) Priorité: 30.08.2024 FR 2409262
(71) Demandeur: Commissariat à l'Energie Atomique et aux Energies Alternatives, 75015 Paris (FR)
(72) Inventeur: ALAVA, Thomas, 38054 Grenoble cedex 09 (FR); CYR, Pierre, 38054 Grenoble cedex 09 (FR); EYVRARD, Doriane, 38054 Grenoble cedex 09 (FR); DAUFOUY, Guillaume, 38054 Grenoble cedex 09 (FR)
(74) Mandataire: INNOV-GROUP

(57) **Abrégé**

L'invention concerne un dispositif utilisé pour la resuspension de matériel biologique, comprenant :
- Un boîtier comportant au moins deux parties assemblées l'une avec l'autre de manière étanche, ledit boîtier comportant plusieurs parois, ces parois étant composés d'une paroi supérieure, d'une paroi inférieure et d'une paroi latérale, lesdites parois délimitant un volume interne,
- Un empilement (E) réalisé suivant un axe principal et placé dans ledit volume interne et composé, suivant cet axe principal d'au moins un premier ensemble formé d'une première plaque de distribution fluidique (40) et d'un premier filtre (30) superposé, ladite première plaque de distribution fluidique (40) comportant sur sa face dite supérieure, orientée vers une face du filtre, plusieurs organes en surélévation formant des chemins d'écoulement fluidique (50),
- Au moins une entrée fluidique (IN) et une sortie fluidique (OUT) débouchant dans ledit volume interne (V), en vis-à-vis desdits chemins d'écoulement fluidique (50).

## Description

### Domaine technique de l'invention

La présente invention se rapporte à un dispositif utilisé pour la resuspension de matériel biologique capturé sur un filtre.

### Etat de la technique

Dans le cadre des analyses environnementales pour la recherche de contaminants biologiques (par exemple la recherche de bactéries Escherichia Coli ou bactéries Entérocoques pour la norme européenne des eaux de baignade ou pour la protection de l'ostréiculture), les cibles à rechercher sont présentes en faibles concentrations au sein des échantillons à analyser.

A l'heure actuelle, les techniques d'analyse en laboratoire à partir d'un échantillon prélevé sur le terrain sont basés sur l'amplification du nombre de cibles, soit par incubation pendant 24h à 37°C (amplification par croissance bactérienne), soit par multiplication du matériel génétique de la cible via un protocole PCR (« Polymerase Chain Reaction »).

A la fin de l'amplification, les cibles sont suffisamment enrichies pour être détectées et identifiées par les équipements de laboratoire. L'ensemble des techniques connues ne permettent pas d'avoir un temps de réponse quant aux concentrations bactériennes sur le terrain en moins de 6 heures entre le moment du prélèvement d'échantillon et le moment du résultat en laboratoire. Cette contrainte de durée ne permet pas une prise de décision rapide en cas de contamination.

Les techniques classiques, dites de préconcentration, permettent d'augmenter artificiellement la concentration en cibles bactériennes.

Ces techniques consistent à prélever un gros volume (1 à 10 litres par exemple) de l'échantillon à analyser, cet échantillon contenant N bactéries ciblées. Cet échantillon est filtré sur un substrat afin d'isoler les bactéries.

Ensuite, on applique un protocole de resuspension de ces bactéries en utilisant une solution de resuspension de volume plus faible. En fin de processus, on obtient un échantillon à la concentration en cibles bactériennes supérieures à celle en cibles bactériennes de l'échantillon initial prélevé.

Les techniques connues pour réaliser la filtration et la resuspension présentent cependant certains inconvénients :
- Elles nécessitent souvent une manipulation du filtre, pour passer de l'étape de filtration à l'étape de resuspension,
- Les bactéries sont souvent accrochées à la surface du filtre, nécessitant également des opérations manuelles pour les décoller efficacement.

Or ces manipulations peuvent occasionner des pertes du matériel biologique, sa dégradation et des contaminations.

Par ailleurs, la resuspension mise en œuvre pour récupérer le matériel biologique peut s'avérer inefficace et ne permet pas forcément de pouvoir traiter plusieurs filtres en même temps.

Différents dispositifs de filtration ont été décrits dans les brevets US4741832**,** US5034124 **et** US4362621**.**

Il existe donc un besoin de disposer d'une solution technique permettant de faciliter l'étape de resuspension, cette solution pouvant être adaptée pour traiter plusieurs filtres de manière simultanée pour gagner en temps et en efficacité.

### Exposé de l'invention

Ce but est atteint par un dispositif utilisé pour la resuspension de matériel biologique, comprenant :
- Un boîtier comportant au moins deux parties assemblées l'une avec l'autre de manière étanche, ledit boîtier comportant plusieurs parois, ces parois étant composés d'une paroi supérieure, d'une paroi inférieure et d'une paroi latérale, lesdites parois délimitant un volume interne,
- Un empilement réalisé suivant un axe principal et placé dans ledit volume interne et composé, suivant cet axe principal d'au moins un premier ensemble formé d'une première plaque de distribution fluidique et d'un premier filtre superposé, ladite première plaque de distribution fluidique comportant sur sa face dite supérieure, orientée vers une face du filtre, plusieurs organes en surélévation formant des chemins d'écoulement fluidique,
- Au moins une entrée fluidique et une sortie fluidique débouchant dans ledit volume interne, en vis-à-vis desdits chemins d'écoulement fluidique, l'entrée fluidique comportant plusieurs canaux de distribution fluidique ménagés dans la paroi latérale dudit boîtier et débouchant dans ledit volume interne et la sortie fluidique comportant plusieurs canaux de distribution fluidique ménagés dans la paroi latérale dudit boîtier et débouchant dans ledit volume interne.

Selon une autre particularité, l'empilement comporte N ensembles identiques audit premier ensemble, avec N supérieur ou égal à 2.

Selon une autre particularité, le boîtier présente une forme développée autour d'un axe de révolution, ladite entrée fluidique et ladite sortie fluidique étant réalisées sous la forme de conduits orientés suivant deux directions radiales distinctes.

Selon une autre particularité, les canaux de distribution fluidique sont orientés chacun suivant une direction radiale distincte.

Selon une autre particularité, l'entrée fluidique et la sortie fluidique sont diamétralement opposées.

Selon une autre particularité, chaque plaque de distribution fluidique comporte au moins une languette venant s'encastrer dans un logement interne du boîtier.

Selon une autre particularité, le boîtier comporte sur sa paroi inférieure et/ou sur sa paroi supérieure une ouverture ménagée pour accueillir une tête d'une source ultrasonique.

### Brève description des figures

D'autres caractéristiques et avantages vont apparaître dans la description détaillée qui suit faite en regard des dessins annexés dans lesquels :

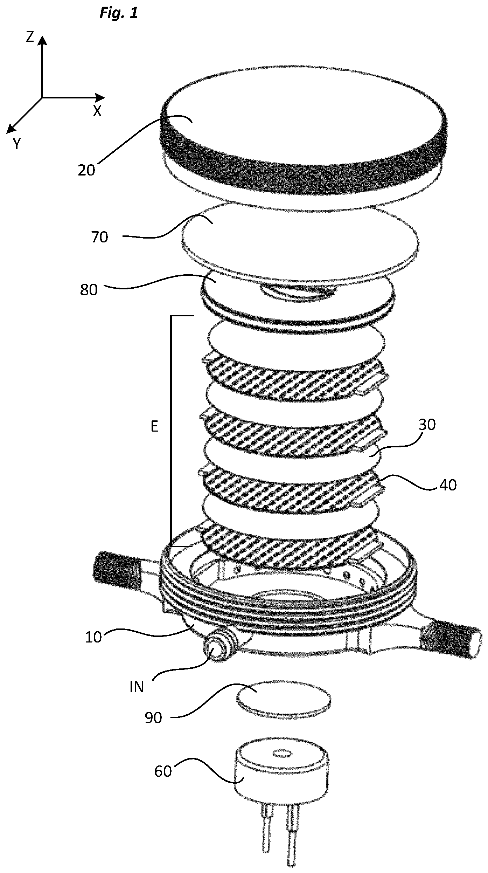

- La figure 1 représente le dispositif conforme à l'invention, vu en éclaté ;
- La figure 2 représente un exemple de réalisation de la base du boîtier du dispositif ;
- La figure 3 représente l'empilement intégré dans le dispositif de l'invention, vu en éclaté ;
- La figure 4 représente une plaque de distribution fluidique employée dans l'empilement du dispositif et le filtre venant se plaquer contre une face de ladite plaque ;
- La figure 5 montre de manière schématique un système fluidique dans lequel est inséré le dispositif de l'invention et illustre son principe de fonctionnement ;

### Description détaillée d'au moins un mode de réalisation

Pour la suite de la description, on définit un repère orthonormé (X, Y, Z).

Les termes comme « supérieur », « inférieur », « au-dessus » et « au-dessous » sont à comprendre en tenant compte de la direction Z qui est choisie verticale.

L'invention vise un dispositif adapté pour réaliser la resuspension de matériel biologique, préalablement capturé sur la surface d'un filtre du dispositif.

Il est connu de venir capturer un matériel biologique à la surface d'un filtre après filtration d'un échantillon liquide par ledit filtre.

Le dispositif de l'invention vise à faciliter le détachement du matériel biologique capturé à la surface dudit filtre. On verra que le dispositif peut être adapté pour traiter plusieurs filtres de manière simultanée.

Le dispositif comporte un boîtier composé d'au moins deux parties principales, dites première partie et deuxième partie, assemblées de manière étanche l'une avec l'autre.

La première partie du boîtier forme une base 10 et la deuxième partie du boîtier forme un couvercle 20 venant se refermer sur la base 10, par exemple par vissage. Un capot 80 peut être prévu pour recouvrir l'empilement E (voir description ci-dessous) et un joint de compression 70 peut être prévu pour assurer la fermeture étanche du couvercle 20 sur la base 10, le joint étant positionné entre ledit capot 80 et le couvercle 20.

Le boîtier présente avantageusement une forme générale développée autour d'un axe de révolution (suivant Z). Il présente une paroi inférieure, une paroi supérieure et une paroi latérale.

Les parois du boîtier délimitent un volume interne V. Le volume interne V est notamment délimité par la paroi inférieure et les parois latérales de la base 10 du boîtier.

Le dispositif comporte une entrée fluidique IN et une sortie fluidique OUT réalisées sur la paroi latérale du boîtier et débouchant dans ledit volume interne.

L'entrée fluidique IN et la sortie fluidique OUT sont avantageusement positionnées de manière diamétralement opposée (par exemple selon Y).

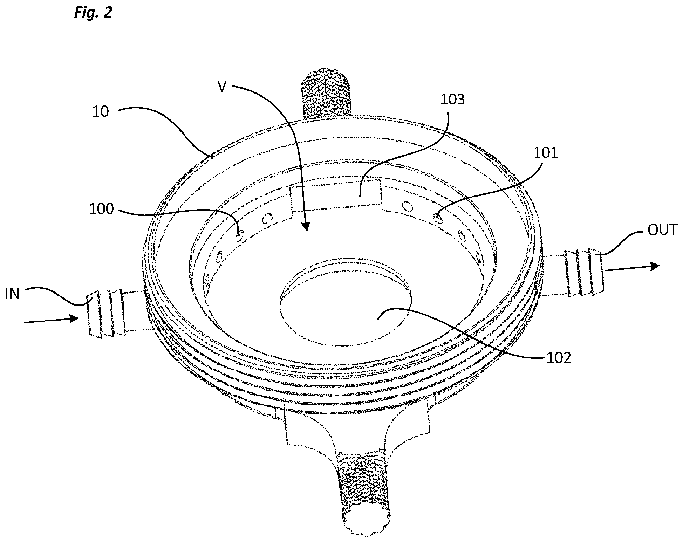

De manière avantageuse, comme illustré par la figure 2, l'entrée fluidique IN comporte un unique conduit d'entrée et plusieurs canaux 100 de distribution fluidique distincts reliés audit conduit d'entrée et débouchant dans le volume interne V, suivant plusieurs directions radiales. Ces canaux 100 sont par exemple réalisées sur la base 10 du dispositif.

De manière avantageuse, la sortie fluidique OUT comporte plusieurs canaux de distribution fluidique distincts, réalisés suivant plusieurs directions radiales, sortant du volume interne et débouchant chacun dans un unique conduit de sortie. Ces canaux 101 sont par exemple réalisées sur la base 10 du dispositif.

Le conduit d'entrée et le conduit de sortie peuvent comporter chacun un embout destiné à coopérer avec l'extrémité d'un conduit (voir système fluidique ci-après).

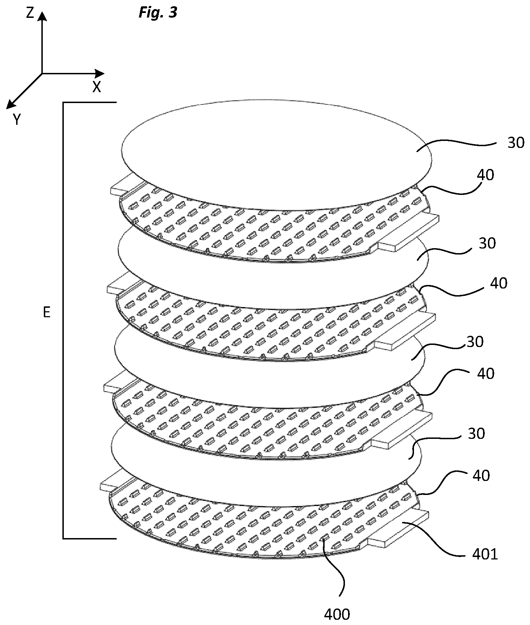

Selon l'invention, le dispositif comporte un empilement 30 (figure 3) destiné à venir se loger dans ledit volume interne V. L'empilement E vient se loger dans ledit volume interne V du boîtier, de sorte à être orientée transversalement à ladite direction Z.

L'empilement E est constitué d'au moins un ensemble comportant une plaque de distribution fluidique 40 et un filtre 30 à traiter, dont une face, dite face active, vient s'appliquer contre la plaque. La face active du filtre est celle contre laquelle a été capturé le matériel biologique.

L'empilement E peut comporter plusieurs de ces ensembles identiques superposés, permettant ainsi de traiter plusieurs filtres de manière simultanée.

Selon l'invention, chaque plaque de distribution fluidique 40 comporte sur sa face supérieure plusieurs organes en surélévation espacés les uns des autres, comme des picots 400 ou équivalents, contre lesquels le filtre 30 vient s'appliquer par sa face active 300.

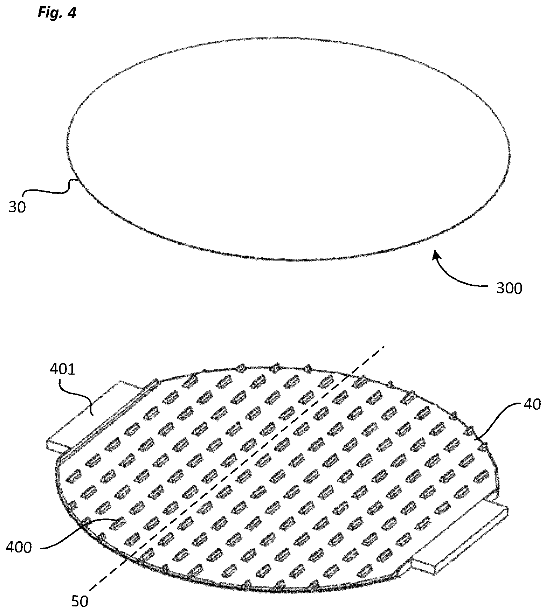

Les chemins d'écoulement fluidique (50 - ligne en pointillés sur la figure 4), créés pas la présence et l'orientation des picots, sont aménagés suivant la même direction que celle donnée à l'entrée et à la sortie fluidique (selon une direction parallèle X).

De manière avantageuse, chaque chemin d'écoulement fluidique 50 suit une direction parallèle à X et est aménagé en vis-à-vis d'un canal de distribution fluidique 100 de l'entrée fluidique IN et d'un canal de distribution fluidique 101 de la sortie fluidique OUT.

Selon un aspect particulier, le dispositif comporte une source ultrasonique et le dispositif comporte sur sa paroi inférieure un logement 102 (figure 2) destiné à accueillir une tête 60 de la source ultrasonique. En activant cette source, le boîtier est amené à vibrer, ce qui contribue au détachement du matériel biologique lors de la resuspension. Une membrane 90 peut être prévue entre la tête 60 et le boîtier pour transmettre les vibrations ultrasonores. Cette membrane 90 vient se loger dans ledit logement 102.

Selon une particularité, la plaque de distribution fluidique 40 comporte au moins une languette 401 venant s'encastrer dans un logement 103 du boîtier, cette languette 401 servant à verrouiller la position de la plaque et à créer une membrane de transmission vibratoire entre le boîtier et la plaque lorsque la source ultrasonique est active.

Selon une réalisation avantageuse, la plaque de distribution fluidique 40 comporte deux languettes 401 de ce type, agencées de manière diamétralement opposée (suivant une direction transversale à X, par exemple selon Y).

Selon un aspect très avantageux, comme décrit ci-dessus, l'empilement E peut comporter plusieurs ensembles identiques superposés, chaque ensemble étant formé d'une plaque de distribution fluidique 40 et d'un filtre 30 en appui contre les picots 400 de la plaque. L'empilement E est alors composé d'une alternance de plaque et de filtre, chaque plaque faisant office de séparateur.

Il faut noter que la taille du volume interne V, selon Z, pourrait être choisie selon le nombre d'ensembles filtre+plaque présents dans l'empilement E.

L'empilement E est réalisé et intégré au boîtier de sorte que les chemins d'écoulement fluidique 50 de toutes les plaques soient positionnés suivant une même orientation (suivant X). La solution injectée dans le dispositif vient ainsi se propager dans tous les canaux d'écoulement fluidique 50 ainsi formés.

Le dispositif de l'invention est adapté pour venir s'insérer dans un système fluidique complet adapté à la resuspension d'un matériel biologique et à l'élution de ce matériel biologique.

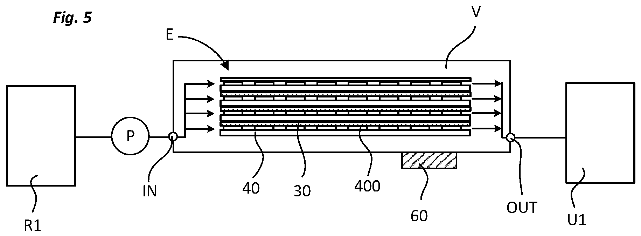

En référence à la figure 5, ce système comporte un réservoir R1 contenant une solution de resuspension connecté sur l'entrée fluidique IN du dispositif.

Le système comporte une unité de récupération U1 du rétentat, après resuspension et élution, connectée sur la sortie fluidique OUT du dispositif.

Le système comporte des moyens de pompage P contrôlés pour assurer l'injection de la solution de resuspension dans le dispositif et pour assurer son évacuation en dehors du dispositif. Les moyens de pompage peuvent comporter une pompe péristaltique positionnée entre le réservoir R1 et l'entrée fluidique IN du dispositif.

Le principe de fonctionnement est le suivant :
- Un échantillon liquide est préalablement filtré de manière à capturer sur la surface du filtre 30 un matériel biologique cible. La filtration est avantageusement réalisée sur plusieurs filtres distincts de manière à maximiser la quantité de matériel biologique collecté. Elle est réalisée sur un dispositif distinct de ce celui de l'invention.
- Chaque filtre 30 est positionné, par sa face active, c'est-à-dire la face contre laquelle le matériel biologique a été capturé, contre la face supérieure d'une plaque de distribution fluidique 40.
- Les ensembles formés d'une plaque et d'un filtre sont empilés, en respectant l'alternance plaque/filtre sur toute l'épaisseur de l'empilement E. Bien entendu, il serait possible de n'intégrer qu'un seul ensemble plaque + filtre mais l'invention présente l'avantage de pouvoir en traiter plusieurs de manière simultanée.
- L'empilement E ainsi réalisé est positionné dans la base 10 du boîtier, les languettes 401 de chaque plaque venant se loger dans le logement 103 prévu sur le boîtier, pour verrouiller leur positionnement et former la membrane de de transmission vibratoire.
- Le boîtier est refermé de manière étanche, par exemple par vissage du couvercle 20 sur la base 10.
- Le réservoir contenant la solution de resuspension est connecté sur l'entrée fluidique IN et l'unité de récupération U1 du rétentat est connecté sur la sortie fluidique OUT.
- L'unité de commande contrôle les moyens de pompage pour injecter la solution de resuspension dans le volume interne, à travers l'entrée fluidique.
- Via l'entrée fluidique IN, la solution de resuspension se divise dans les différents canaux de distribution fluidique 100 et pénètre dans le volume interne V.
- La solution de resuspension se propage à travers les chemins d'écoulement fluidique 50 formés entre chaque plaque 40 et le filtre 30 positionné au-dessus.
- Pour aider au décrochage du matériel biologique, l'unité de commande contrôle la source ultrasonique pour faire vibrer le boîtier du dispositif par l'intermédiaire de la tête 60 émettrice.
- En circulant dans chaque chemin d'écoulement fluidique 50, la solution de resuspension vient décrocher le matériel biologique capturé sur la face active du filtre.
- La solution de resuspension contenant le matériel biologique est évacuée par la sortie fluidique OUT, via ses canaux de distribution fluidique 101.
- Le matériel biologique est récupéré dans l'unité de récupération U1 du rétentat.

L'invention présente de nombreux avantages parmi lesquels :
- Elle permet d'effectuer la resuspension du rétentat à la surface d'un ou plusieurs filtres simultanément.
- Elle permet d'utiliser un faible volume de solution de resuspension, en optimisant les dimensions internes du volume du dispositif.
- Les chemins d'écoulement fluidique sont adaptés pour acheminer la solution de resuspension au contact de l'intégralité de la surface des filtres.
- Le traitement ultrasonique appliqué à l'ensemble des filtres contribue au détachement du matériel biologique.

Il faut noter qu'il serait possible d'ajouter un dispositif de chauffage pour permettre une lyse thermique du matériel biologique piégé dans les filtres.

## Revendications

1. Dispositif utilisé pour la resuspension de matériel biologique, comprenant :
- Un boîtier comportant au moins deux parties assemblées l'une avec l'autre de manière étanche, ledit boîtier comportant plusieurs parois, ces parois étant composés d'une paroi supérieure, d'une paroi inférieure et d'une paroi latérale, lesdites parois délimitant un volume interne,
- Un empilement (E) réalisé suivant un axe principal et placé dans ledit volume interne et composé, suivant cet axe principal d'au moins un premier ensemble formé d'une première plaque de distribution fluidique (40) et d'un premier filtre (30) superposé, ladite première plaque de distribution fluidique (40) comportant sur sa face dite supérieure, orientée vers une face du filtre, plusieurs organes en surélévation formant des chemins d'écoulement fluidique (50),
- Au moins une entrée fluidique (IN) et une sortie fluidique (OUT) débouchant dans ledit volume interne (V), en vis-à-vis desdits chemins d'écoulement fluidique (50), l'entrée fluidique (IN) comportant plusieurs canaux de distribution fluidique (100) ménagés dans la paroi latérale dudit boîtier et débouchant dans ledit volume interne (V) et la sortie fluidique (OUT) comportant plusieurs canaux de distribution fluidique (101) ménagés dans la paroi latérale dudit boîtier et débouchant dans ledit volume interne (V).

2. Dispositif selon la revendication 1, **caractérisé en ce que** l'empilement comporte N ensembles identiques audit premier ensemble, avec N supérieur ou égal à 2.

3. Dispositif selon la revendication 1 ou 2, **caractérisé en ce que** le boîtier présente une forme développée autour d'un axe de révolution, ladite entrée fluidique (IN) et ladite sortie fluidique (OUT) étant réalisées sous la forme de conduits orientés suivant deux directions radiales distinctes.

4. Dispositif selon la revendication 3, **caractérisé en ce que** les canaux de distribution fluidique (100, 200) sont orientés chacun suivant une direction radiale distincte.

5. Dispositif selon la revendication 3 ou 4, **caractérisé en ce que** l'entrée fluidique (IN) et la sortie fluidique (OUT) sont diamétralement opposées.

6. Dispositif selon l'une des revendications 1 à 5, **caractérisé en ce que** chaque plaque de distribution fluidique (40) comporte au moins une languette (401) venant s'encastrer dans un logement (103) interne du boîtier.

7. Dispositif selon l'une des revendications 1 à 6, **caractérisé en ce que** le boîtier comporte sur sa paroi inférieure et/ou sur sa paroi supérieure une ouverture (102) ménagée pour accueillir une tête (60) d'une source ultrasonique.
